# EUROPEAN PATENT APPLICATION

(11) **EP 4 617 948 A1**
(43) Date of publication of application: **17.09.2025**
(21) Application number: 24163396.5
(22) Date of filing: 13.03.2024
(51) Int. Cl.: G06N 3/042, G06N 5/022, G06F 16/332, G06F 16/33, G06F 40/35, G06N 3/0475, G06N 3/0455

(54) **PROMPT SPACE OPTIMIZATION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A prompt is received from an end user device, the prompt being for prompting a large language model, LLM. A RAG engine queries a knowledge base using a query formed from the prompt, to obtain search results. The search results are filtered to exclude information in a store of information known by the LLM. A retrieval augmented generation, RAG, prompt is formed from the received prompt and the filtered search results. The RAG prompt is sent to the LLM and a response is received from the LLM. The response is sent to a user interface or used to control a communications network.

## Description

The present disclosure relates to prompt space optimization in connection with Large Language Models where retrieval augmented generation (RAG) is used. It is particularly related to, but not limited to, use of prompt space optimization with RAG for enhancing security of telecommunications networks and services.

### BACKGROUND

Large Language Models (LLMs) are a type of machine learning model used to generate natural language. Recently, they have become increasingly popular and have been used in a variety of applications such as writing books, summarizing documents, writing poetry, writing source code and more. Large language models typically have billions of parameters and are extremely computationally expensive to train; they use transformer neural network architectures giving the ability to perform attention and self-attention on sequences of data such as text and source code and other sequences in different modalities such as audio, speech signals, images, videos and more.

There is a growing desire to use LLM functionality in specific applications such as telecommunications and communications network services security enhancement however this presents a number of challenges. One of these challenges relates to accuracy of security and other actions provided by LLM functionality.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In an aspect of the technology there is a computer implemented method comprising:
receiving a prompt from an end user device, the prompt being for prompting a large language model, LLM;
querying a knowledge base using a query formed from the prompt, to obtain search results;
filtering the search results to exclude information in a store of information known by the LLM;
creating a retrieval augmented generation, RAG, prompt from the received prompt and the filtered search results;
sending the RAG prompt to the LLM and receiving a response from the LLM; and any of:
   sending the response to a user interface;
   using the response to control a communications network.

In this way it is possible to make optimal use of a context window of the prompt since context from the knowledge base is omitted where that is established to be already known by the LLM.

Preferably the method comprises creating the store of information known by the LLM by submitting a prompt to the LLM without using RAG, receiving a response and storing the response. This is an effective and efficient way, which can be performed on the fly if desired, to obtain the information known by the LLM.

Preferably the method comprises repeating the operations of submitting a prompt, receiving a response and storing the response, for a plurality of different prompts. This may be performed in advance so as to form a store of information known by the LLM. The approach is scalable since by performing in advance it is possible to have efficient real time operation.

Preferably the plurality of different prompts are specified as being likely to be received from end user equipment in relation to a use case. In this way the store of information known by the LLM is bespoke for a particular use case and can be comprehensive for that use case without the store becoming overly large and inefficient.

Preferably the method comprises creating the store of information known by the LLM as a knowledge graph comprising nodes and edges. Using a knowledge graph enables a compact, concise representation which is memory efficient at storage time and at retrieval time. Using a knowledge graph enables retrieval of information from the knowledge graph to be achieved accurately by identifying nodes for particular entities and traversing from those nodes to neighbouring nodes.

Preferably the method comprises creating the store of information known by the LLM as a vector database by encoding the information using a neural network encoder. Using a vector representation is compact and saves storage. Using a vector representation enables a similarity metric to be computed efficiently using geometry.

Preferably the method comprises creating the store of information known by the LLM as a relational database. This gives the benefit of compatibility with other relational database. Another benefit is compact size of the database and ease of retrieval using relational database queries.

Preferably the method comprises forming the query from the prompt by translating at least part of the prompt into a relational database query, or encoding at least part of the prompt using an encoder, or finding an entity from a node of a knowledge graph which is present in the prompt.

In various examples the method comprises receiving a use case from an end user device and selecting the prompt from a plurality of pre-prepared security threat prompts. This is beneficial for automating security enhancement of a communications network.

Preferably the response from the LLM is a threat analysis and using the response to control a communications network comprises triggering a security action.

According to another aspect of the technology there is a computer program comprising instructions which when executed on a computer implement the method any of the examples described above.

According to another aspect of the technology there is an apparatus comprising:
at least one processor;
a memory storing instructions that when executed by the at least one processor performs a method comprising:
   receiving a prompt from an end user device, the prompt being for prompting a large language model, LLM;
   querying a knowledge base using a query formed from the prompt, to obtain search results;
   filtering the search results to exclude information in a store of information known by the LLM;
   creating a retrieval augmented generation, RAG, prompt from the received prompt and the filtered search results;
   sending the RAG prompt to the LLM and receiving a response from the LLM; and any of:
      sending the response to a user interface;
      using the response to control a communications network.

Preferably creating the store of information known by the LLM comprises submitting a prompt to the LLM without using RAG, receiving a response and storing the response.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a retrieval augmented generation (RAG) engine with prompt optimization for use with a Large Language Model (LLM);
FIG. 2 is a flow diagram illustrating a method for extracting and representing information known by an LLM;
FIG. 3 is a flow diagram of a method performed by a RAG engine such as that of FIG. 1;
FIG. 4 is a flow diagram illustrating a method performed by a RAG engine such as that of FIG. 1 for mitigating security threats to a communications network;
FIG. 5 is a schematic diagram of a computing-based device for deploying a RAG engine with prompt space optimization.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

As mentioned above, there is a growing desire to use LLM functionality in specific fields such as telecommunications and communications network services however this presents a number of challenges.

One approach has been to fine-tune a pre-trained LLM on a particular field such as telecommunications and communications network services. However, a downside of fine-tuning a pre-trained LLM is that it's time consuming and expensive since the model weights themselves are changed. Indeed to fine-tune an LLM on a telecommunications field, a large dataset needs to be prepared from a telecommunications knowledge base in the form of questions and answers. It's also expensive to execute the fine-tuning and a new LLM needs to be produced and used for the telecommunications field. Anytime the knowledge base is updated the LLM would need to be retrained and the training dataset would need to be recreated.

Another approach for making an LLM specific to a particular field such as telecommunications and communications network services is to use prompt engineering. This is where the language of the instruction provided to the LLM is tweaked to get the best quality responses for the particular field. This is effectively 'making the task fit the pretrained LLM rather than training the LLM on the task. One limitation of this technique is when an application requires answers from data that the LLM was not trained on, such as personal information, events that occurred after the LLM was trained, or private enterprise knowledge bases.

A technique called Retrieval Augmented Generation (RAG) may used to enable an LLM to become bespoke to a particular field such as telecommunications or a particular proprietary dataset. RAG allows LLMs to access additional data resources that aren't a part of the LLMs training data. In this way an LLM can be tailored to a particular field such as telecommunications and communications network services without fine-tuning the LLM. This is done by extracting data from the additional data resources (which are specific to the chosen field such as telecommunications and communications network services) and including this data in the LLM prompt. The data added to the prompt is chosen carefully due to the limited input size (prompt space) of LLMs. Often prompt space is limited to 2000-4000 words for Open Source models.

The present technology is concerned with how to make the best use of limited LLM prompt space whilst achieving high accuracy for RAG deployments. In various example a representation of knowledge known by an LLM is formed and used to filter potential information to be included in the prompt. This acts to exclude information from the prompt which is already available to the LLM. In this way the prompt space is used to hold as much information unknown to the LLM as possible. The information unknown to the LLM is obtained from one or more knowledge bases depending on the particular deployment. For example, where the application is concerned with security of a telecommunications network the knowledge bases are repositories of security protocols, security procedures, known security threat characteristics, telemetry data of historical security breaches, and other security data relating to the particular telecommunications network.

Obtaining and using the knowledge from the LLM in order to filter potential information to be included in the prompt is not straightforward to achieve in a scalable manner. LLMs are by nature, enormous. To enable scalability carefully chosen representations of the knowledge from the LLM are used. In some cases the representation is a graph. In some cases the representation comprises vector embeddings in a multi dimensional vector space.

The basic principle of RAG is to extract chunks of data from a knowledge base that potentially contain the answer to a user query and include these in an LLM prompt. The task for the LLM is then to interpret the chunks provided and use the information within to answer the user's query.

There are several challenges with RAG however, the LLMs have limited input sizes, so only a certain amount of information (often 2000-4000 words for open source models) can be included in the prompt, so the retrieved information must be carefully chosen to best make use of this space whilst covering the necessary information to answer the query. There are also challenges in ensuring the LLM uses the provided documentation to answer questions rather than its own trained knowledge.

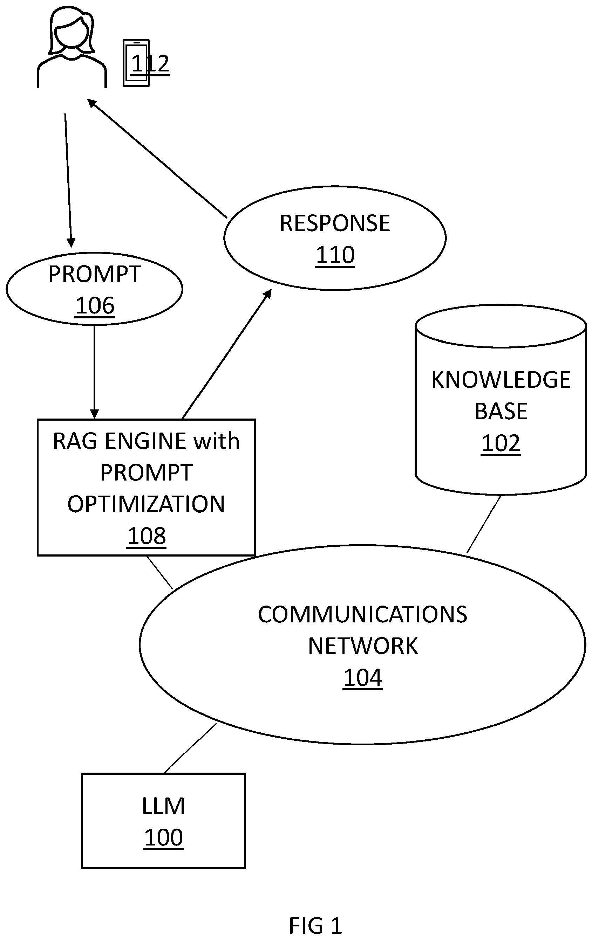

FIG. 1 is a schematic diagram of a RAG engine with prompt optimization 108 for use with a Large Language Model (LLM) 100 in a RAG deployment. A RAG deployment is where a RAG engine 108 is used in conjunction with a knowledge base 102 and an LLM such as LLM 100. In the example of FIG. 1 the RAG engine 108 is deployed as a web service in the cloud although this is not essential. The RAG engine 108 is computer implemented and may be deployed at an end user device, an on premise server, or any other computing entity accessible to an end user device. The functionality of the RAG engine 108 is distributed between more than one computing entity in some cases. The RAG engine 108 aims at ensuring that information in a RAG prompt submitted to LLM 100 excludes information already known to the LLM 100. A RAG prompt is a prompt 106 received from an end user device which is augmented with data from a knowledge base 102.

The LLM is a machine learning model comprising a neural network with a transformer architecture enabling attention and self-attention. In some examples the LLM has billions of parameters. A non-exhaustive list of examples of LLMs which may be used is: Llama, GPT 4, Bloom, Gemini.

The knowledge base 102 is any store of data such as any one or more of: a relational database, a graph database, a vector database. The knowledge base 102 may hold only data from a particular enterprise, or only data relating to a particular field or topic. In an example, the knowledge base 102 holds only data about security of a telecommunications network. The knowledge base 102 is distributed in some cases.

The RAG engine 108 is computer implemented. It comprises functionality to enable retrieval augmented generation by operating with the LLM 100. The RAG engine receives prompts from end user equipment, such as prompt 106, augments the prompt 106 with data retrieved from knowledge base 102, and submits the augmented prompt to LLM 100. The RAG engine 108 has database access technology to enable the RAG engine 108 to access knowledge base 102 using a query computed by the RAG engine 108 so as to retrieve data to augment prompt 106. The RAG engine 108 computes the query from prompt 106 and according to a type of database technology used to form the knowledge base 102. For example, where the knowledge base 102 is a relational database the RAG engine 108 computes the query in the form of a relational database query. Where the knowledge base 102 is a vector database the RAG engine 108 computes the query in the form of a vector which is an embedding vector computed from prompt 106. The embedding vector is used by the vector database to search for neighbouring vectors in the vector database. The neighbouring vectors are decoded into information which is used to augment the prompt 106.

The augmented prompt is optimized by the RAG engine so as to exclude information already known by the LLM 100 from the optimized prompt. This makes more room in the prompt for information from the knowledge base 102.

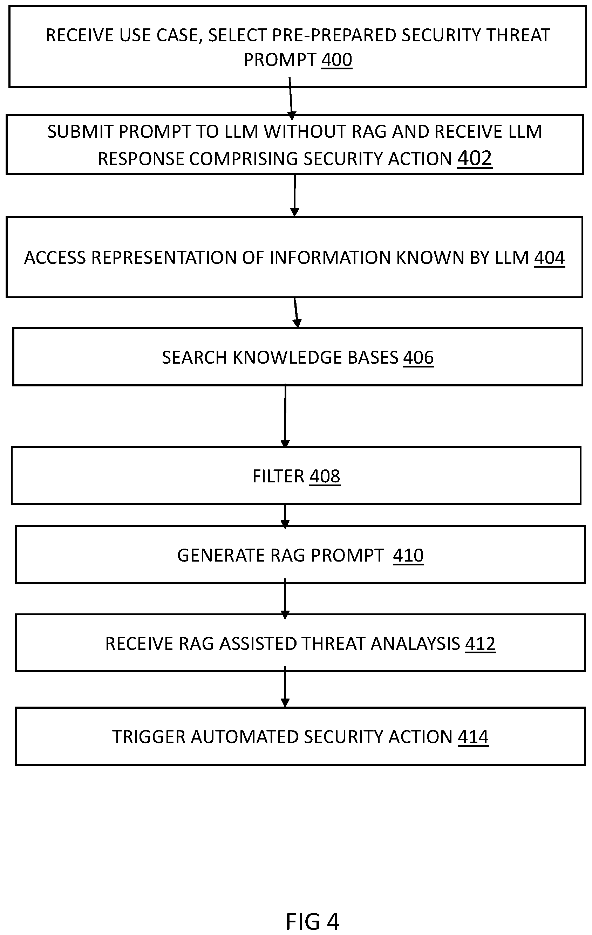

The augmented prompt is submitted by the RAG engine 108 to the LLM 100. The LLM 100 computes a response to the augmented prompt. The response is used to trigger downstream operation. In an example the downstream operation is to trigger a security action in a telecommunications network as explained in more detail with reference to FIG. 4.

The RAG engine 108, knowledge base 102, and LLM 100 are in communication with one another such as via communications network 104 which is the internet or any other communications network such as an intranet, wide area network or other communications network.

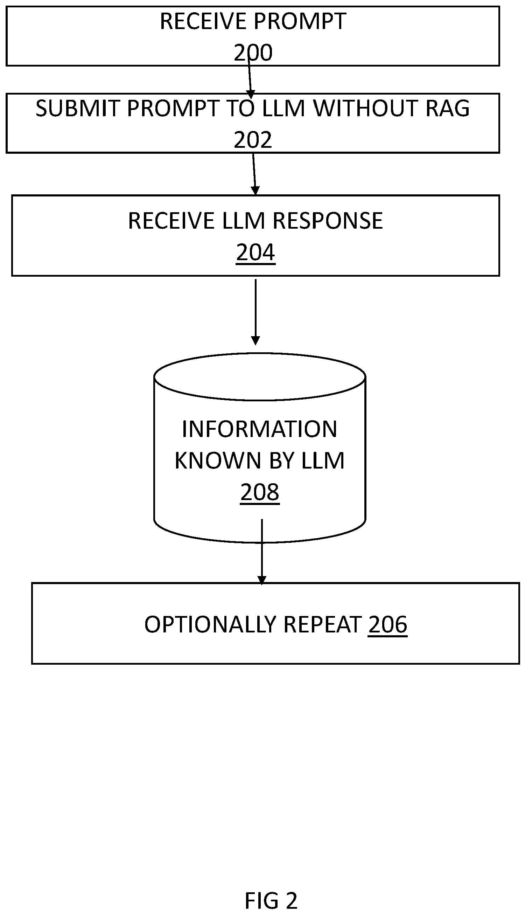

FIG. 2 is a flow diagram illustrating a computer implemented method for extracting and representing information known by an LLM. The method of FIG. 2 may be performed by the RAG engine 108 or any other computing entity having access to the LLM 100.

A prompt is received 200 from an end user computing device. The prompt is submitted 202 to the LLM 100 without using RAG and a response is received 204 from the LLM 100. The response is stored in a store of information known by the LLM 208.

In some cases the method of FIG. 2 is performed on the fly; that is, just in time when the RAG engine is in operation to create an optimized prompt from the prompt received at operation 200.

In some cases the method of FIG. 2 is performed in advance and includes an optional repeat 206 operation whereby operations 200, 202, 204 are repeated for a plurality of prompts so as to form a store of information 208 known by the LLM. The plurality of prompts are synthetically computed prompts or manually constructed prompts. Synthetically generated prompts are computed using the LLM or using rules. The plurality of prompts are ones which are expected to be received from end user devices according to the particular deployment.

In some cases the method of FIG. 2 is performed in a hybrid manner, both on the fly and in advance. In this case the information known by the LLM 208 may be a cache holding responses from previous prompts received from a variety of user devices. A prompt is received at operation 200 and a check is made in the cache to see if a response to that prompt, or a similar prompt, is already in the cache. If so, the operation 202 is omitted. If the check is unsuccessful the operation 202 and 204 proceed. In some cases the cache is seeded with a plurality of results from manually constructed or synthetically generated prompts.

In order to improve scalability the information known by the LLM 208 is stored using one or more of: a graph database, a vector database, a relational database. In this way scalability can be improved by making the store of information known by the LLM 208 more concise so as to save memory and/or by improving efficiency of retrieval of information from the store.

In the case of a graph database the graph comprises a plurality of nodes connected by edges. Each node represents an entity and edges represent relations between entities such as class membership or other relations. In order to construct the graph database, the RAG engine uses a Named Entity Recognition (NER) process to extract a plurality of entities from the responses obtained at operation 204. Any suitable NER process is used such as statistical models, machine learning, GATE, OpenNLP, SpaCy. A non-exhaustive list of example entities is: a telephone number, an internet protocol address, an address, a name of a person, a name of a place, a name of an organization, a time, a day, a date, a percentage, a packet loss rate, a round trip time. The graph database is formed using any commercially available knowledge graph formation technology including but not limited to: GraphHub.net, neo4j, graphdb, amazon Neptune.

In the case of a vector database, content items are encoded using a neural network encoder into a vector embedding, representing the content item in a multi dimensional space. The encoder is any suitable neural network encoder such as CLIP, BERT. Because the same encoder is used to encode each content item the vectors are in the same multi dimensional space. The encoder is trained in such a way that semantically similar content items are close together in the multi dimensional space. The content items are text, images, videos, audio signals, voice mail messages, or other modalities. In some cases the content items are split into chunks and each individual chunk is encoded into a vector embedding.

In the case of a relational database, the information is stored in a plurality of tables having rows and columns and where tables may be linked. A relational database schema is available describing the structure of the database and a relational database language is used to query the relational database.

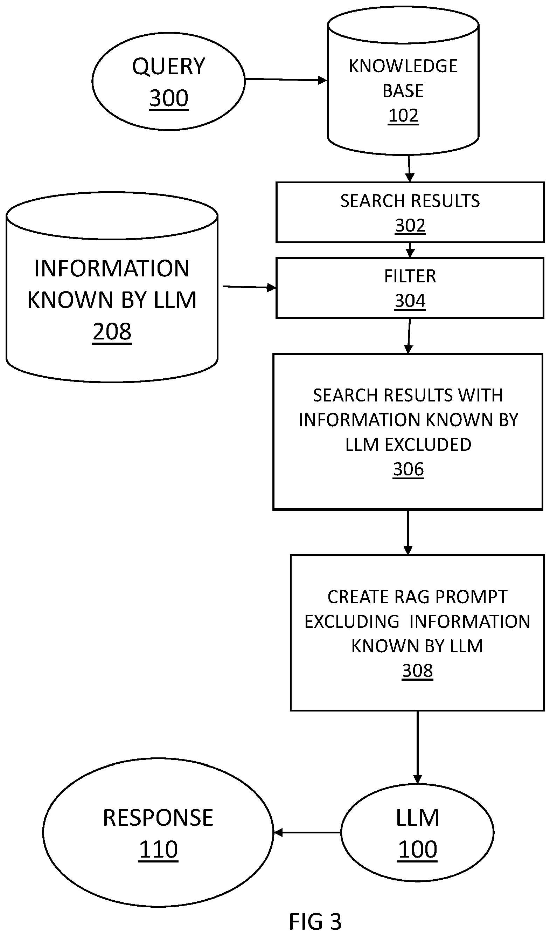

FIG. 3 is a flow diagram of a method performed by a RAG engine such as that of FIG. 1. Prior to the process of FIG. 3 the RAG engine has received a prompt 106 from an end user computing device. The prompt is intended to be submitted to an LLM. The RAG engine uses the prompt to form a query 300 where the query is suitable for execution on a knowledge base 102 which is a knowledge base of content items which may be helpful for an application domain of the RAG deployment. In an example, the application domain is security of a telecommunications network service and the knowledge base 102 holds content items such as security protocols, security rules, telemetry data observed during security breaches in the telecommunications network, telemetry data obtained from the telecommunications network during normal secure operation, and other data. The query is in a form suitable for the nature of the knowledge base 102. Thus where the knowledge base is a relational database the query 300 is a relational database query. Where the knowledge base is a vector database the query is a vector. The RAG engine forms the query 300 using rules in some cases. The RAG engine forms the query 300 by encoding information in the prompt using a neural network encoder in some cases. The RAG engine forms the query 300 using information in the prompt.

The execution of query 300 against knowledge base 102 produces results referred to as search results 302 in FIG. 3. The search results comprise content items which may be useful context for aiding the LLM when processing the prompt.

In order to make best use of the context window of the prompt the search results are filtered 304 against the store of information known by the LLM 208 that was obtained as explained with reference to FIG. 2. The filtering process removes or excludes content items which are in both the search results and the information known the by the LLM 208. The filtering process maintains content items which are in only the search results and not in the information known by the LLM 208. Thus search results with information known by the LLM excluded 306 are obtained

The RAG engine creates 308 a RAG prompt using the filtered search results. Thus the context window is efficiently used.

The RAG prompt is submitted to the LLM 100 and the LLM computes a response 110. The response 110 has improved accuracy as compared with not using the filtering process of FIG. 3.

The present technology is used in field of communications network technology in some cases.

FIG. 4 is a flow diagram illustrating a method performed by a RAG engine such as that of FIG. 1 for mitigating security threats relating to a communications network.

The RAG engine receives 400 a communications network use case from an end user device. In a non-limiting example the use case is "deploying a webserver to host data to share with a third party".

A pre-prepared prompt is submitted 402 to an LLM to generate potential security threats associated with the use case. In an example the pre-prepared prompt is obtained from a look up table by searching for a prompt associated with the use case or is created by the RAG engine using rules.

The LLM generates a response (without using RAG). The response is received at the RAG engine and comprises a security action which is an action that can be taken to improve security of the communications network given the use case. In an example the response is "you should consider two factor authentication to overcome identity spoofing".

The response is encoded into an embedding vector using a neural network encoder. Answers to any previously asked 'representative questions' are also encoded into embedding vectors using the encoder. The representative questions are prompts that are likely to be received from the end user equipment.

The RAG engine brings in data from external sources such as a trusted threat assessment organisation and internal security documentation. Thus, with reference to FIG 4, the RAG engine searches 406 knowledge bases. The trusted threat assessment organization and the internal security documentation are examples of knowledge base 102 and are trusted.

The RAG engine searches these trusted knowledge bases to obtain search results 302. Any search results 302 of sufficient similarity to already generated responses (such as from the store of information known by the LLM 208) are omitted from the search results to be included in a prompt. Thus a filter 408 operation is applied to the search results.

The filtered search results are taken alongside the original threat-analysis generating prompt and a new prompt is created for the LLM. Thus a RAG prompt is generated 410. In response to the prompt the LLM sends a threat analysis to the RAG engine. The RAG engine receives 412 the RAG assisted threat analysis. The RAG engine is able to trigger 414 an automated security action according to the threat analysis, such as by sending instructions to nodes of a communications network.

The LLM generates a new RAG-assisted threat analysis where the context window space is more optimally used as it contains information not already known to the LLM. This means a wider set of security consideration can be considered, and more complete/accurate mitigations for the use case applied. For example, triggering certain security-related processes such as configuration of particular resources in a certain way, or additional security conditions being placed on the project that leave it better protected against current security threats.

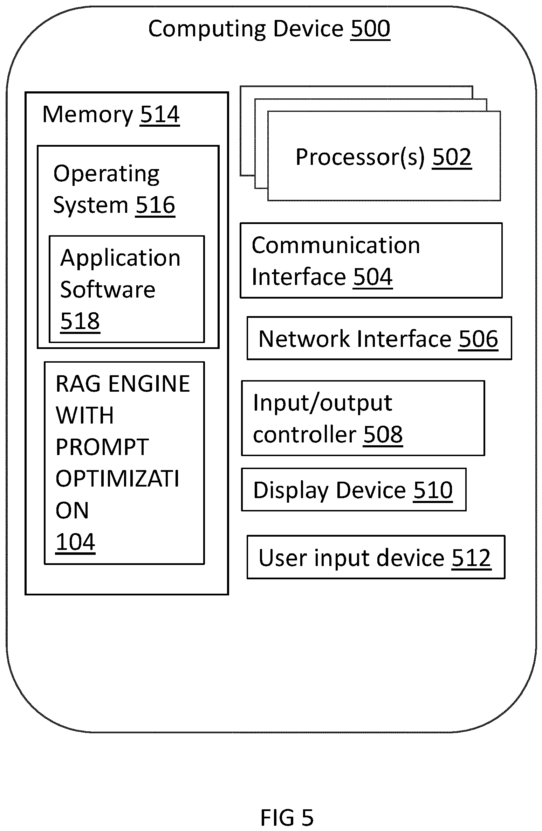

FIG. 5 is a schematic diagram of a computing-based device for deploying a RAG engine with prompt space optimization. FIG. 5 illustrates various components of an example computing device 500 in which embodiments of the RAG engine 104 are implemented in some examples. The computing device is of any suitable form such as a smart phone, a desktop computer, a laptop computer.

The computing device 500 comprises one or more processors 502 which are microprocessors, controllers or any other suitable type of processors for processing computer executable instructions to control the operation of the device in order to perform the methods of figures 2 to 4. In some examples, for example where a system on a chip architecture is used, the processors 502 include one or more fixed function blocks (also referred to as accelerators) which implement a part of the method of figures 2 to 4 in hardware (rather than software or firmware). That is, the methods described herein are implemented in any one or more of software, firmware, hardware. The computing device has a data store holding prompts, augmented prompts, entities, thresholds, counters and other data. The computing device has the RAG engine 104 within the memory 514. Platform software comprising an operating system 516 or any other suitable platform software is provided at the computing-based device to enable application software 518 to be executed on the device. Although the computer storage media (memory 514) is shown within the computing-based device 500 it will be appreciated that the storage is, in some examples, distributed or located remotely and accessed via a network or other communication link (e.g. using communication interface 504).

The computing-based device 500 also comprises an input/output controller 508 arranged to output display information to a display device 510 which may be separate from or integral to the computing-based device 500. The display information may provide a graphical user interface such as to display optimized prompts. The input/output controller 508 is also arranged to receive and process input from one or more devices, such as a user input device 512 (e.g. a mouse, keyboard, camera, microphone or other sensor). In some examples the user input device 512 detects voice input, user gestures or other user actions. In an embodiment the display device 510 also acts as the user input device 512 if it is a touch sensitive display device. The input/output controller 508 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer implemented method comprising:
receiving a prompt from an end user device, the prompt being for prompting a large language model, LLM;
querying a knowledge base using a query formed from the prompt, to obtain search results;
filtering the search results to exclude information in a store of information known by the LLM;
creating a retrieval augmented generation, RAG, prompt from the received prompt and the filtered search results;
sending the RAG prompt to the LLM and receiving a response from the LLM; and any of:
sending the response to a user interface;
using the response to control a communications network.

2. The computer implemented method of claim 1 comprising creating the store of information known by the LLM by submitting a prompt to the LLM without using RAG, receiving a response and storing the response.

3. The computer implemented method of claim 2 comprising repeating the operations of submitting a prompt, receiving a response and storing the response, for a plurality of different prompts.

4. The computer implemented method of claim 3 wherein the plurality of different prompts are specified as being likely to be received from end user equipment in relation to a use case.

5. The computer implemented method as claimed in any of claims 2 to 4 comprising creating the store of information known by the LLM as a knowledge graph comprising nodes and edges.

6. The computer implemented method as claimed in any of claims 2 to 4 comprising creating the store of information known by the LLM as a vector database by encoding the information using a neural network encoder.

7. The computer implemented method as claimed in any of claims 2 to 4 comprising creating the store of information known by the LLM as a relational database.

8. The computer implemented method of any preceding claim comprising forming the query from the prompt by translating at least part of the prompt into a relational database query, or encoding at least part of the prompt using an encoder, or finding an entity from a node of a knowledge graph which is present in the prompt.

9. The computer implemented method of any of claims 1 to 8 comprising receiving a use case from an end user device and selecting the prompt from a plurality of pre-prepared security threat prompts.

10. The computer implemented method of claim 9 wherein the response from the LLM is a threat analysis and wherein using the response to control a communications network comprises triggering a security action.

11. A computer program comprising instructions which when executed on a computer implement the method of any of claims 1 to 10.

12. An apparatus comprising:
at least one processor;
a memory storing instructions that when executed by the at least one processor performs a method comprising:
receiving a prompt from an end user device, the prompt being for prompting a large language model, LLM;
querying a knowledge base using a query formed from the prompt, to obtain search results;
filtering the search results to exclude information in a store of information known by the LLM;
creating a retrieval augmented generation, RAG, prompt from the received prompt and the filtered search results;
sending the RAG prompt to the LLM and receiving a response from the LLM; and any of:
sending the response to a user interface;
using the response to control a communications network.

13. The apparatus of claim 12 comprising creating the store of information known by the LLM by submitting a prompt to the LLM without using RAG, receiving a response and storing the response.

14. The apparatus of claim 13 comprising repeating the operations of submitting a prompt, receiving a response and storing the response, for a plurality of different prompts.

15. The apparatus of any of claims 12 to 14 wherein the knowledge base is any of: a knowledge graph, a vector database, a relational database.
